# EUROPEAN PATENT APPLICATION

(11) **EP 4 576 462 A1**
(43) Date of publication of application: **25.06.2025**
(21) Application number: 24220024.4
(22) Date of filing: 15.12.2024
(51) Int. Cl.: H02G 11/00, B65H 75/44, F16L 3/01, H02G 11/02

(54) **CABLE MANAGEMENT SYSTEM AND METHODS FOR A ROTARY JOINT**

(30) Priority: 22.12.2023 US 202363614319 P
(71) Applicant: MacDonald, Dettwiler and Associates Inc., Brampton, Ontario L6Y 6K7 (CA)
(72) Inventor: Sachdev, Tej, Brampton, L6Y 6K7 (CA); Haensel, James, Brampton, L6Y 6K7 (CA); Charbonneau, Justin, Brampton, L6Y 6K7 (CA); Brelski, Jakub, Brampton, L6Y 6K7 (CA); Tisher, Steve, Brampton, L6Y 6K7 (CA)
(74) Representative: Humphrey-Evans, Edward John

(57) **Abstract**

Provided is a system for cable management in a rotary joint. The system includes a rotary housing that rotates about a rotational axis relative to a stationary housing. The stationary housing has a stationary cavity for allowing a cable to pass through. The system includes a cable management system for managing one or more cables. The cable management system includes a cable cassette attached to the stationary housing, wherein the cable cassette winds the cable around the cable cassette as the rotary joint rotates.

## Description

### Technical Field

The following relates generally to cable management for rotary joints, and more particularly to cable management for rotary joints in harsh environments, such as space.

### Introduction

Packaging and constraining electrical conductors such as cables in a rotary joint, have one end of the cable bundle fixed, and the other end expected to rotate as the joint rotates. Done incorrectly, the strain caused by rotation will cause the conductors to break within their design lifetime, and the stiffness of the cable bundle will affect performance of the joint.

The conductors inside a cable, whether designed to carry power or data, are not sized to bear mechanical loads. Rather, they are sized to carry current or to minimize signal noise, or to meet some other electrical objective. When cables are subject to external mechanical loading, such as those caused by a rotating joint to which the cables are attached, the conductors in the cable may break. They may break in tension from insufficient mechanical support, or they may break in bending due to the strain caused by a small bend radius, or they may experience cycle-related fatigue.

The space environment, particularly beyond the Van Allen belts, can be harsh. Electromagnetic fields in the environment can interfere with high-speed data lines. Micro meteoroids and orbital debris can physically damage conductors. Radiation can cause materials to degrade.

In conventional systems, when packaged externally, a cable harness has a joint loop large enough to accommodate the entire range of motion. However, the loop implied by a large range of motion can cause a snagging hazard or kinematic constraints.

Accordingly, there is a need for an improved system and method for cable management in a rotary joint that overcomes at least some of the disadvantages of existing systems and methods.

### Summary

A system for managing one or more cables in a rotary joint is provided. The system includes: a rotary housing that rotates about a rotational axis relative to a stationary housing; the stationary housing having a stationary cavity for allowing a cable to pass through; and a cable management subsystem for managing the cable. The cable management system includes a cable cassette attached to the stationary housing. The cable cassette winds the cable around the cable cassette as the rotary joint rotates.

In some embodiments, the cable passes through the rotary joint from the stationary housing through to the rotary housing.

In some embodiments, a first end of the cable is fixed to the cable cassette, and a second end of the cable rotates with the rotary housing as the rotary joint rotates about rotational axis.

In some embodiments, the cable is fixed at the first cable end by a cable clamp in the cable cassette.

In some embodiments, the cable conducts any one or more of electricity, data, and another utility.

In some embodiments, the cable is a bundle of cables.

In some embodiments, the cable is flattened into a ribbon of smallest cables to minimize the outer diameter of the cable cassette.

In some embodiments, the system further includes an end of travel detection system that identifies an end of travel of the rotary joint.

In some embodiments, the end of travel detection system includes limit switches that detect the end of travel.

In some embodiments, the cable cassette includes a cable guide, and the cable is spiraled around the cable guide to wind around the cable cassette.

In some embodiments, the system further includes a cable shield on the stationary housing, wherein the cable shield inhibits the cable from moving axially towards the stationary housing.

In some embodiments, the system further includes a cassette outer housing to contain the cable as the cable cassette is wound out.

In some embodiments, the cable cassette has a cable cassette outer diameter, and a diameter of the inner surface of the cassette outer housing is the cable cassette outer diameter.

In some embodiments, the cable cassette has a cable cassette inner diameter, and the cable cassette inner diameter is two times the bend radius of the cable.

In some embodiments, the system further includes a single degree of freedom rotary actuator system.

In some embodiments, the system further includes a manipulator joint assembly.

In some embodiments, the system further includes a drivetrain that drives rotation of the rotary housing.

In some embodiments, the system further includes position sensing components for sensing relative position between the rotary housing and the stationary housing.

In some embodiments, the system further includes a thermal control system for maintaining the system at operating temperatures.

In some embodiments, the system further includes seals in the drive train and between the rotary housing and the stationary housing.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a system for cable management in a rotary joint, in accordance with an embodiment;
Figures 2A and 2B are schematic diagrams of a cassette for cable management, in a wound-up position and a wound-out position, respectively, in accordance with an embodiment;
Figures 3A, 3B, and 3C are perspective, perspective, and section views, respectively, of a system for cable management in a rotary joint, in accordance with an embodiment;
Figures 4A and 4B are perspective and section views, respectively, of a system for cable management in a rotary joint, in accordance with an embodiment; and
Figure 5 is a flow chart of a method for cable management in a rotary joint, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

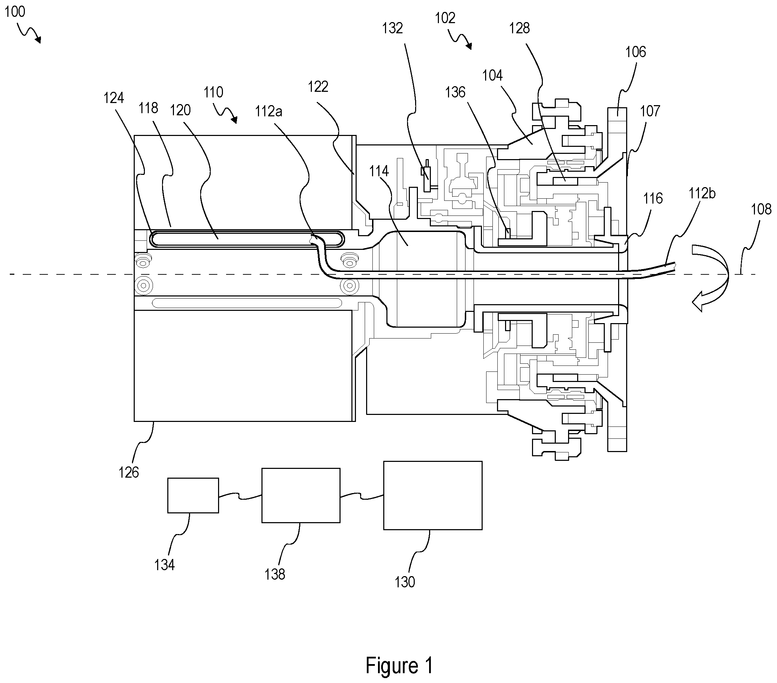

Referring to Figure 1, described therein is a system 100 for cable management of a rotary joint 102, in accordance with an embodiment. The system 100 may be deployed in harsh environments such as in space-based applications.

The rotary joint 102 includes a stationary housing 104 that is fixed to an object (not shown). The rotary joint 102 includes a rotary housing 106 that rotates about a rotational axis 108 relative to the stationary housing 104. The rotary housing 106 is attached at surface 107 to an object to be rotated (not shown). The rotary joint 102 may be a joint in a robotic arm of a robotic manipulator.

The system 100 includes a cable management system 110 (also referred to as "cable management subsystem") for managing a cable 112 that passes through the rotary joint 102. The cable 112 passes through the rotary joint 102 from the stationary housing 104 through to the rotary housing 106. The cable 112 may include at least one cable, and may include a plurality of cables. The cable 112 may be a bundle of cables. The cable 112 conducts any one or more of electricity, data (e.g., Ethernet), and other utilities.

The rotary joint 102 may only rotate a predetermined amount (e.g., +/- 200 degree joint rotation) by an end of travel detection system. The end of travel detection system identifies the end of travel of the rotary joint 102. The end of travel detection system may include limit switches that detect the end of travel. The limit switches stop rotation of the rotary joint 102 at the end of travel. The end of travel is based on the cable management system 110 sizing so that the cable 112 is not constricted tightly on the rotary joint 102.

The stationary housing 104 has a stationary cavity 114 for allowing the cable 112 to pass through. The rotary housing 106 has a rotary housing 116 for allowing the cable 112 to pass through.

The cable management system 110 includes a cable cassette 118 on the stationary housing 104. The system 100 includes at least one cable cassette 118. The system 100 may include multiple cable cassettes 118 on one actuator to manage multiple cables 112.

The cable management system 110 packages and constrains the cable 112 in the rotary joint 102. A first end 112a of the cable 112 bundle is fixed to the cable cassette 118. A second end 112b of the cable 112 rotates with the rotary housing 106 as the rotary joint 102 rotates about rotational axis 108.

The cable cassette 118 includes a cable guide 120. The cable 112 is spiraled around the cable guide 120 to wind around the cable cassette 118.

The cable cassette 118 may provide advantages over existing approaches to cable management. The cable cassette 118 may advantageously avoid strain caused by rotation which could otherwise cause the cable 112 to break within the cable's design lifetime. The cable cassette 118 may avoid issues related to the stiffness of the cable 112 bundle which could affect performance of the rotary joint 102.

The cable cassette 118 structures a loop of the cable 112 to expand and contract around the rotational axis 108. Advantageously the cable cassette 118 may improve the life of the rotary joint 102 over conventional systems that may load a cable in torsion, which may be typical of rotary joints with internal cable harnesses. In conventional systems, the outer diameter is far too large to be useful in a joint the size. Some conventional systems have an internal cable harnesses that loads the bundle in torsion (twisting), substantially reducing the life of the conductor, and the joint by implication.

The cable cassette 118 allows for an increase range of motion in a much smaller package (diameter about the rotational axis 108) than would have been expected using conventional bend radii.

The cable 112 is packaged in a bundle as it passes through the rotary joint 102. The cable 112 is flattened into a 'ribbon' of smallest cables to minimize the outer diameter of the cable cassette 118.

Conventional industrial robots may tolerate an externally mounted harness because the industrial robot's work cells may be highly controlled with less potential for snag. The environments that conventional industrial robots operate in may not be harsh enough to require the protection offered by internal packaging that may be desirable in harsh environments, such as in space applications. Conventional industrial robots may also be more easily maintained, for example by replacing a broken harness. This means that when harnesses are packaged internally in conventional systems, the reduced life due to loading the harness in torsion is less critical. Further, loading the harness in torsion is a much simpler concept for conventional systems.

There are certain applications that require the combination of range of motion, cycle life, environmental conditions (e.g., space), constrained packaging volume, and low recurring cost.

The cable cassette 118 may be used in any one or more of applications where cables are required to move, where volume is constrained, where the environment is hazardous to the harness, where maintenance is challenging, and/or where the cycle-life of the harness is not small.

The cable management system 110 includes a cable shield 122 on the stationary housing 104. The cable shield 122 may be optional. The cable shield 122 inhibits the cable 112 from moving axially towards the stationary housing 104. For example, the cable shield 122 may inhibit the cable 112 from impacting an optical encoder on the stationary housing 104, for example, during launch.

The cable management system 110 routes the cable 112 internal to the rotary joint 102. Routing the cable 112 through the rotary joint 102 may advantageously shield the cable 112 and physically protect the cable 112, as well as eliminate a source of operational snagging hazards. Enabling joint rotation with a large cable 112 may also be provided by the cable cassette 118 that allows the cable 112 to bend as the rotary joint 102 rotates as opposed to twisting the cable 112.

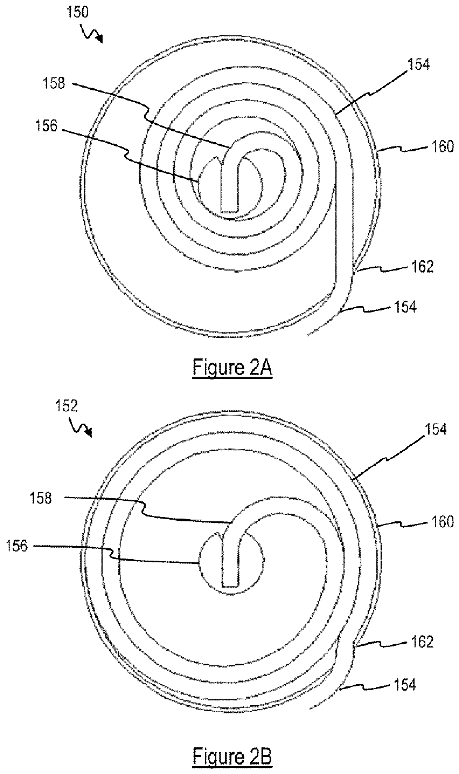

Referring to Figures 2A and 2B, illustrated therein is a section view of a cable cassette 150, in accordance with an embodiment. The cassette 150 may be the cable cassette 118 as described with reference to Figure 1. The cassette 150 includes a cable 154, which may be a cable bundle and/or a plurality of cables.

The cassette 150 includes an interior cable attachment 156. The cable 154 is wound around the interior cable attachment 156 as the cable 154 rotates with respect to the cassette 150. The cable 154 is attached at a first end of the cable 158 to the interior cable attachment 156.

The cassette 150 includes an exterior cable housing 160 that houses the cable 154. The cable 154 passes through an exit hole 162 in the exterior cable housing 160.

Figure 2A illustrates the cable 154 in a wound-up position 150. In the wound-up position 150, the cable 154 is wound up around the interior cable attachment 156. As the cable 154 rotates with respect to the cassette 150, the cable 154 winds around itself and also contacts itself.

Figure 2B illustrates the cable 154 in a wound-out position 152. In the wound-out position 152, the cable 154 is wound out around the exterior cable housing 160. As the cable 154 rotates with respect to the cassette 152, the cable 154 winds out to contact the exterior cable housing 150 and the cable 154 also contacts itself.

Figures 2A and 2B illustrate the cable 154 wound centrifugally, acting in a direction away from the center of the axis of rotation. The cable 154 may be wound helically, in the shape of a helix, where the cable 154 curves around the interior cable attachment 156. The cable 154 may be wound centrifugally and/or helically.

Referring again to Figure 1, the cable 112 is fixed at the first cable end 112a by a cable clamp 124. The cable 112 spirals in towards the cable clamp 124 on the cable cassette 118.

The cable clamp 124 may for example, have a gap to clamp on the cable 112 wrapped with guideline tape or embedded in similar flexible strain relief material.

In order to allow the rotary joint 102 to rotate with the cable 112 passing through the conduits 114, 116 and the cable 112 is allowed to bend. The cable 112 is static as the cable passes through the center of the rotary joint 102. The cable 112 is clamped by the cable clamp 124. As the rotary joint 102 rotates, the rotary conduit 116 follows the rotation of the rotary housing 106 while the cable cassette 118 remains static.

The cable cassette 118 has a length that is long enough to accommodate full length of the cable 112 arranged in a flat configuration as the cable 112 enters the cable guide 120.

The cable guide 120 has rounded edges. The cable clamp 124 has a cable clamp tongue at the cable guide 120. The clamp tongue has a tightening radius, so that as the spiral constricts there is no edge over which all the cable 112 is bent. This may advantageously mitigate life limiting aspects by limiting the pinch points or sharp edges that make contact constantly or intermittently with cable jacketing throughout motion.

The cable 112 constricts around the inner hub of the cable cassette 118. The cable 112 is routed in a spiral around the inner hub of the cable cassette 118.

As the rotary joint 122 rotates in a first direction, the cable spiral "winds up" in the cable guide 120 and the cable constricts around the inner cable clamp 124.

As the rotary joint 102 rotates in the opposite direction, the cable spiral "winds out" in the cable guide 120, such that the cable 112 expands to fill and push against the stationary conduit 114 of the stationary housing 104.

The cable clamp 124 holds the cable 112 static. The cable clamp 124 is where the cable 112 exit the cassette housing. The cable clamp 124 allows the cable 112 to be flexed in a bending motion.

The cable cassette 118 may include lacing or tape sheaths to keep order between multiple cables 112 within the spiral.

For example as illustrated with reference to Figures 2A, the cable 112 (154) may be constrained as the spiral is wound out by the cassette outer housing. The cable 112 (154) is constrained as the spiral is wound out by the end of travel detection system that stops joint rotation. At the end of travel, the cable 112 (154) is fully wound up, but not too tight in order to reduce the amount of cable wind up torque experienced at the end of travel.

For example as illustrated with reference to Figures 2B, the cable management system 110 may include a cassette outer housing 126 (160) to contain the cable 112 (154) as the cable cassette 118 (152) is wound out. The outer housing 126 (160) is part of the cable cassette 118 (152).

The cable cassette 118 has a cable cassette outer diameter. The diameter of the inner surface of the cassette housing is the cable cassette outer diameter. The cassette outer diameter is set to meet the tightness of the bend radius of the innermost spiral to which the cable constricts.

The cable cassette 118 has a cable cassette inner diameter. In an embodiment, the cable cassette inner diameter is two times the bend radius of the cable inside the inner cable guide 120. The cable cassette inner diameter is set large enough so that cable jacketing and individual conductors are not bent too far. Generally, there is a constraint with how small the inner diameter of the cable cassette 118 can be and a smallest possible diameter is desired to maximize cassette 118 travel. The constraint is damage to the cable 112 if bent too tightly.

The cable cassette 118 may enable +/- 200 degree joint rotation while passing the cable 112 bundle through the interior of the rotary joint 102.

The system 100 may be part of a set of systems, components, and tools in development for commercialization to the expanding in-orbit servicing market like life extension, monitoring, repairing, upgrading, assembling, modifying orbits, and salvaging operations on spacecraft. The system 100 may be used on planetary surfaces. The system 100 may include a robotic manipulator system that interacts with tools and the spacecraft or payload to perform in-orbit servicing missions.

The robotic manipulator may include a rotary actuator, which provides single degree of freedom rotary motion at each joint of the robotic manipulator. The rotary joint 102 includes the assembly of mechanical and electro-mechanical components that mechanically enable precise rotary motion. The rotary joint 102 may be a subassembly of a higher level assembly, which also includes control electronics and additional structural housings that carry the control electronics and enable mechanical mating of the rotary joint 102 to other arm elements to form the robotic manipulator.

The system 100 may be an electro-mechanical portion of a single degree of freedom rotary actuator system. The system 100 may be a sub-assembly that will integrate with electronic control units and a structural housing to form a complete manipulator joint assembly.

The system 100 includes primary load path components including the stationary housing 104 and the rotary housing 106. The system 100 includes main output bearings 128 that form the primary load path between the stationary housing 104 and the rotary housing 106.

The system 100 includes drivetrain components including a drivetrain 130 that drives rotation of the rotary housing 106. The rotating output of rotary joint 102 is actuated via the drivetrain 130. The drivetrain 130 may include any one or more of a harmonic drive gear reduction, Oldham coupling, spur geartrain, and brushless DC motor module.

The drivetrain 130 includes a motor and encoder packaging. In an embodiment, the encoder is mounted on the rotary joint output. The motor may be an offset motor with spur geartrain. The motor may be a direct drive motor mounting directly to an input of the rotary housing 106.

The system 100 includes position sensing components for sensing relative position between the rotary housing 106 and the stationary housing 104. The position sensing components 132 may include an optical encoder, an ambiguity switch, and a set of limit switches. The position of the rotating output of the rotary joint 102 may be measured by the optical encoder, the ambiguity switch, and the set of limit switches that sense when the rotary joint 102 is at its ends of travel.

The system 100 includes a main cable harness pass through including the cable 112 routed through the center of the rotary joint 102 via the conduits 114, 116. The main cable harness pass through is allowed to rotate with the rotary joint 102 through the cable cassette 118.

The system 100 includes a thermal control system 134 for maintaining the system 100 at operating temperatures. The thermal control system 134 may include resistive heaters and temperature sensing thermistors that heat the system 100 when the system is subjected to a cold environment.

The system 100 includes seals 136 in the drive train and between the rotary housing 106 and the stationary housing 104. The drivetrain may be lubricated using grease. The interfaces of the rotary joint 102 are sealed with the seals 136 to inhibit base oil in the grease from flowing and escaping the rotary joint 102. The seals 136 may prevent grease from contaminating nearby sensors, cameras, or other sensitive equipment.

The system 100 includes a controller 138 for controlling the rotary joint 102. The rotary housing 106 is rotated relative to the stationary housing 104 based on electrical inputs from the controller 138. The controller 138 may control any one or more of the drivetrain 130, the position sensing components 132, and the thermal control system 134.

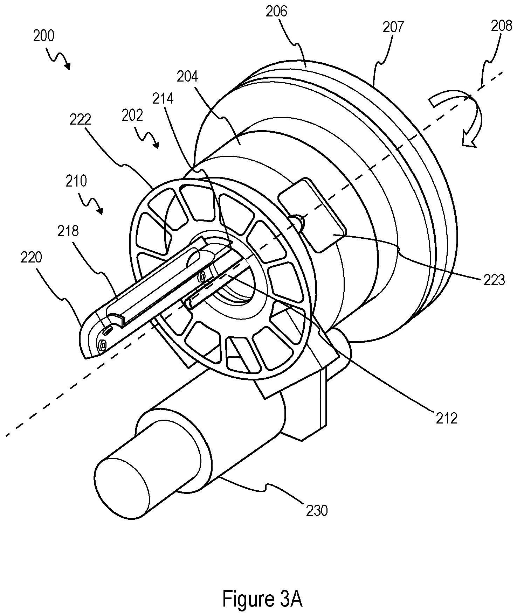

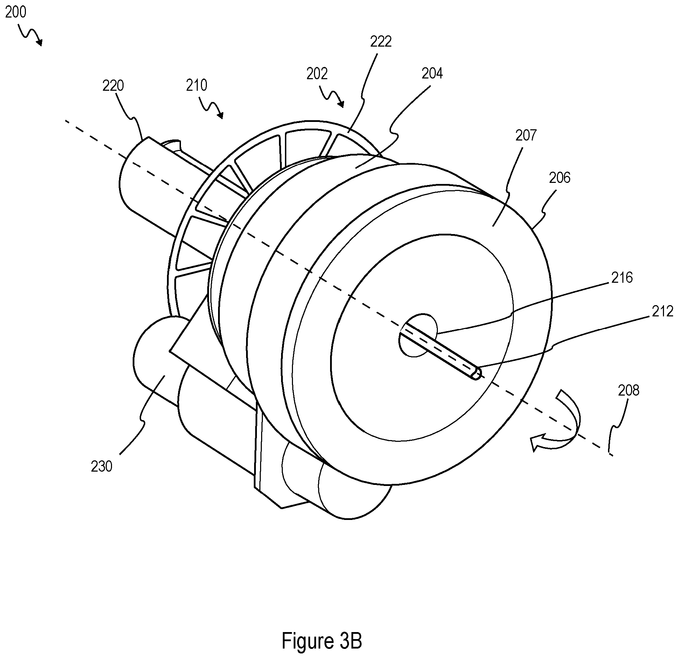

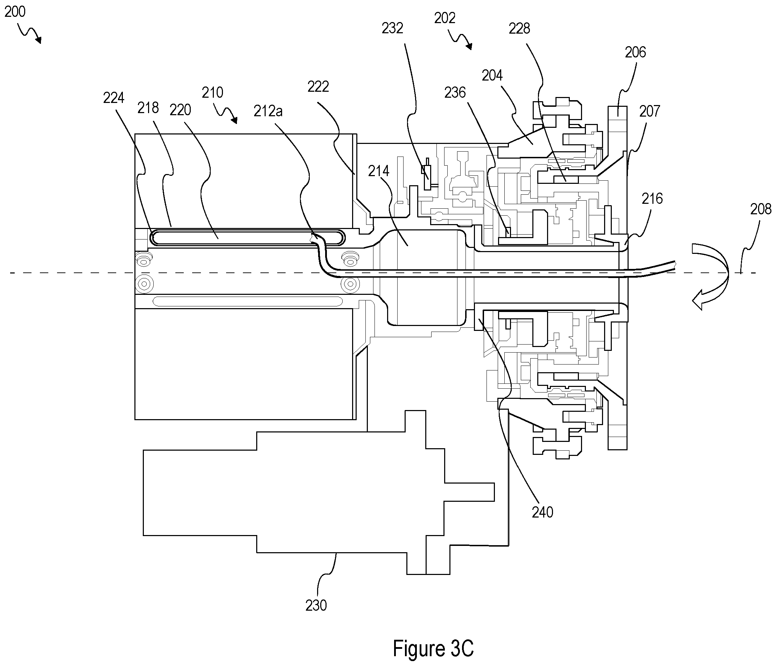

Referring to Figures 3A, 3B, and 3C, described therein is a system 200 for cable management of a rotary joint 202, in accordance with an embodiment. The system 200 may be, for example, the system 100 as described with reference to Figure 1.

The rotary joint 202 includes a stationary housing 204 that is fixed to an object (not shown). The rotary joint 202 includes a rotary housing 206 that rotates about a rotational axis 208 relative to the stationary housing 204. The rotary housing 206 is attached at surface 207 to an object to be rotated (not shown).

The system 200 includes a cable management system 210 for managing a cable 212 that passes through the rotary joint 202. The cable 212 passes through the rotary joint 202 from the stationary housing 204 through to the rotary housing 206.

The stationary housing 204 has a stationary cavity 214 for allowing the cable 212 to pass through. The rotary housing 206 has a rotary housing 216 for allowing the cable 212 to pass through.

The cable management system 210 includes a cable cassette 218 on the stationary housing 204. The cable management system 210 packages and constrains the cable 212 in the rotary joint 202.

The cable cassette 218 includes a cable guide 220. The cable 212 is spiraled around the cable guide 220 to wind around the cable cassette 218.

The cable management system 210 includes a cable shield 222 on the stationary housing 204. The cable shield 222 inhibits the cable 212 from moving axially towards the rotary housing 206. For example, the cable shield 222 may inhibit the cable 212 from impacting an optical encoder 223 on the stationary housing 204, for example, during launch.

The system 200 includes drivetrain components including a drivetrain 230 that drives rotation of the rotary housing 206. The rotating output of rotary joint 202 is actuated via the drivetrain 230. The drivetrain 230 may include any one or more of a harmonic drive gear reduction, Oldham coupling, spur geartrain, and brushless DC motor module.

The system 200 includes position sensing components 232 for sensing relative position between the rotary housing 206 and the stationary housing 204. The system 200 includes seals 236 in the drive train and between the rotary housing 206 and the stationary housing 204.

The conduits 214, 216 are a two piece design where the two portions of the tube are mated via fasteners at a flange 240.

The joint 202 has the ability to sense position and control the cassette 218 to within a travel range that the cassette 218 is capable of, in a reliable fashion so there is no risk of over-travel of the cassette 218 that would result in damage.

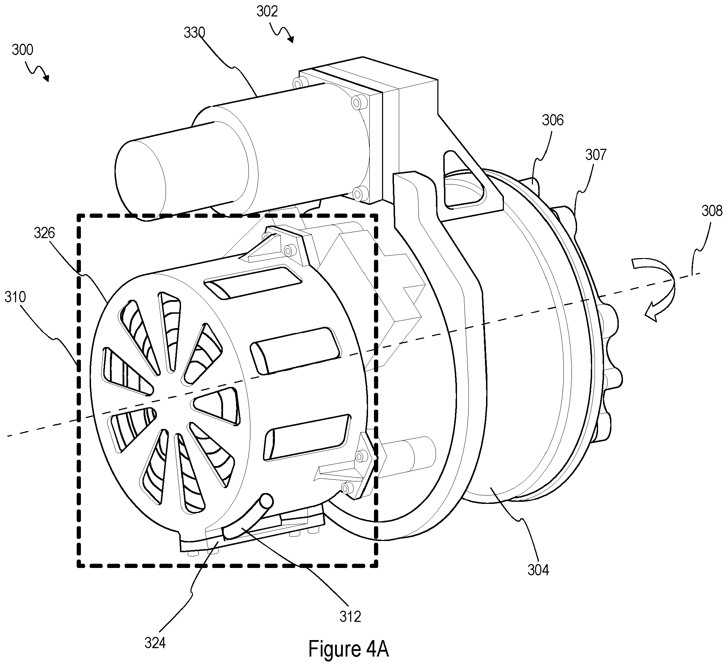

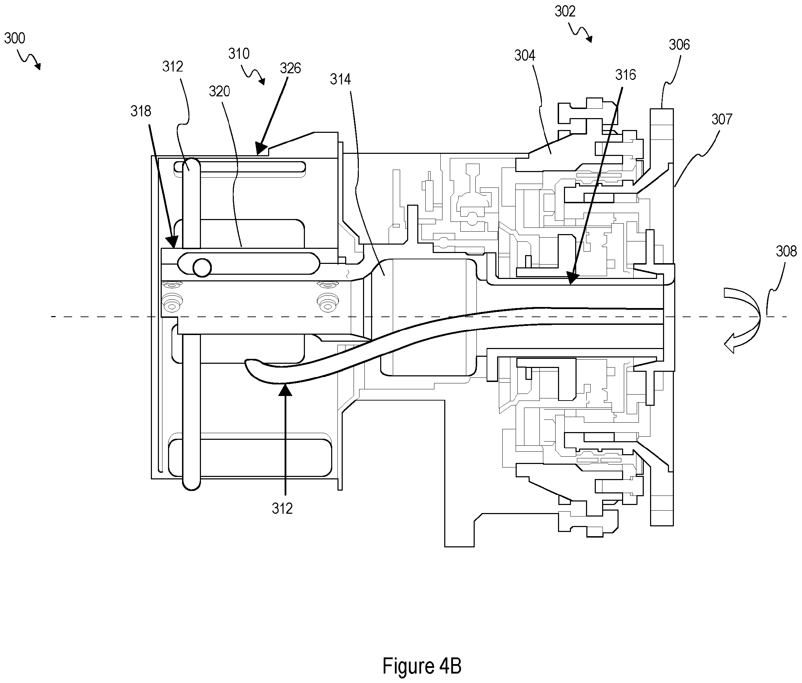

Referring to Figures 4A and 4B, described therein is a system 300 for cable management of a rotary joint 302, in accordance with an embodiment. The system 300 may be, for example, the system 100 as described with reference to Figure 1.

The rotary joint 302 includes a stationary housing 304 that is fixed to an object (not shown). The rotary joint 302 includes a rotary housing 306 that rotates about a rotational axis 308 relative to the stationary housing 304. The rotary housing 306 is attached at surface 307 to an object to be rotated (not shown).

The system 300 includes a cable management system 310 for managing a cable 312 that passes through the rotary joint 302. The cable 312 passes through the rotary joint 302 from the stationary housing 304 through to the rotary housing 306.

The stationary housing 304 has a stationary cavity 314 for allowing the cable 312 to pass through.

The cable management system 210 includes a cable cassette 318 on the stationary housing 304. The cable management system 310 packages and constrains the cable 312 in the rotary joint 302. The cable cassette 318 includes a cable guide 320. The cable 312 is spiraled around the cable guide 320 to wind around the cable cassette 318.

The cable management system 310 includes a cassette outer housing 326. The outer housing 326 is part of the cable cassette 318.

The system 300 includes drivetrain components including a drivetrain 330 that drives rotation of the rotary housing 306. The rotating output of rotary joint 302 is actuated via the drivetrain 330. The drivetrain 330 may include any one or more of a harmonic drive gear reduction, Oldham coupling, spur geartrain, and brushless DC motor module.

In order to allow the rotary joint 302 to rotate with the cable 312 passing through the interior 314, the cable 312 is permitted to bend. The cable 312 is static as the cable 312 passes through the center of the rotary joint 302.The cable 312 is clamped by the cable guide 320. As the rotary joint 302 rotates, the conduit 314 follows the rotation of the rotary joint 302 output while the cable cassette housing 326 remains static. The cable harness wires 312 are spread out to lay beside each other within the cable guide 320. Inside the cassette housing 326, the cable 312 is routed in a spiral. Where the cable 312 exits the cable cassette housing 318 the cable 312 is held static again at an outer cable clamp 324. As the rotary joint 302 rotates in one direction, the spiral "winds up" such that the cable 312 constricts around the cable guide 320. As the rotary joint 302 rotates in the opposite direction, the spiral "winds out" such that the cable 312 expands to fill and push against the inner wall of the cassette housing 326.

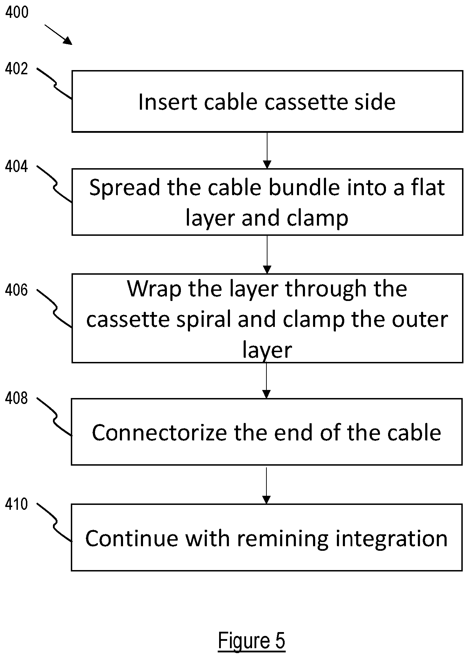

Referring to Figure 5, described therein is a method 400 for cable management, in accordance with an embodiment. The method 400 includes installing a cable in a rotary joint (e.g., rotary joint 102, 202, 302).

At 402, with one end of the joint main harness not connectorized (flying leads only), the un-connectorized end through the pass through tube is inserted from the cable cassette side towards the rotating output side, leaving approximately some cable extending beyond the rotary joint output.

At 404, the cable bundle is spread into a flat layer and clamped at the inner cable clamp.

At 406, the length of flat layer through the cassette spiral is wrapped and clamp the outer layer of spiral in the outer cable clamp.

At 408, the end of the cable harness is connectorized.

At 410, the remaining integration of cable harness continues with the rotary joint assembly.

Once both ends of the harness are connectorized, if rework of the harness or wires/cables within the harness is desired, either removal of connectors of the affected wires and extraction of affected wires, or complete de-connectorization of one end and removal of the entire harness may be needed.

While the above description provides examples of one or more apparatus, methods, or systems, it will be appreciated that other apparatus, methods, or systems may be within the scope of the claims as interpreted by one of skill in the art.

## Claims

1. A system (100) for managing one or more cables (112) in a rotary joint (102), the system comprising:
a rotary housing (106) that rotates about a rotational axis relative to a stationary housing (104);
the stationary housing having a stationary cavity (114) for allowing a cable to pass through; and
a cable management subsystem (110) for managing the cable, the cable management system (110) including:
a cable cassette (118) attached to the stationary housing, wherein the cable cassette winds the cable around the cable cassette as the rotary joint rotates.

2. The system of claim 1, wherein the cable (112) passes through the rotary joint (102) from the stationary housing through to the rotary housing (106).

3. The system of claim 1, wherein a first end of the cable (158) is fixed to the cable cassette, and a second end of the cable rotates with the rotary housing as the rotary joint rotates about rotational axis, and /or wherein the cable is fixed at the first cable end by a cable clamp in the cable cassette.

4. The system of claim 1, wherein the cable conducts any one or more of electricity, data, and another utility.

5. The system of claim 1, wherein the cable is a bundle of cables and/or wherein the cable is flattened into a ribbon of smallest cables to minimize the outer diameter of the cable cassette.

6. The system of claim 1 further comprising an end of travel detection system that identifies an end of travel of the rotary joint, and/or wherein the end of travel detection system includes limit switches that detect the end of travel.

7. The system of claim 1, wherein the cable cassette (118) includes a cable guide (120), and wherein the cable is spiraled around the cable guide to wind around the cable cassette.

8. The system of claim 1 further comprising a cable shield (122) on the stationary housing, wherein the cable shield inhibits the cable from moving axially towards the stationary housing.

9. The system of claim 1 further comprising a cassette outer housing (126) to contain the cable as the cable cassette is wound out; and/or
wherein the cable cassette has a cable cassette outer diameter, wherein a diameter of the inner surface of the cassette outer housing is the cable cassette outer diameter; and/or
wherein the cable cassette has a cable cassette inner diameter, wherein the cable cassette inner diameter is two times the bend radius of the cable.

10. The system of claim 1 further comprising a single degree of freedom rotary actuator system.

11. The system of claim 10 further comprising a manipulator joint assembly.

12. The system of claim 1 further comprising a drivetrain (130) that drives rotation of the rotary housing.

13. The system of claim 1 further comprising position sensing components (132) for sensing relative position between the rotary housing and the stationary housing.

14. The system of claim 1 further comprising a thermal control system (134) for maintaining the system at operating temperatures.

15. The system of claim 1 further comprising seals (136) in the drive train and between the rotary housing and the stationary housing.
